# Europäisches Patentamt

## European Patent Office

## Office européen des brevets

(11) Veröffentlichungsnummer: **0 069 046**
**B1**

(12) ## EUROPÄISCHE PATENTSCHRIFT

(45) Veröffentlichungstag der Patentschrift:
**07.12.88**

(51) Int. Cl.⁴: **G 05 B 15/02,** G 05 B 11/01,
G 05 B 11/42

(21) Anmeldenummer: **82730072.4**

(22) Anmeldetag: **02.06.82**

(54) **Elektronisches Regelgerät.**

(30) Priorität: 26.04.82 DE 3216286
30.06.81 DE 3125779

(43) Veröffentlichungstag der Anmeldung:
05.01.83 Patentblatt 83/1

(45) Bekanntmachung des Hinweises auf die Patenterteilung:
07.12.88 Patentblatt 88/49

(84) Benannte Vertragsstaaten:
AT BE CH DE FR GB LI NL SE

(56) Entgegenhaltungen:
EP-A- 0 033 056
US-A- 4 193 120

ADVANCES IN INSTRUMENTATION, Band 28, Teil 1,
Oktober 1973, Seiten 525-1 bis 525-8, Pittsburgh (USA);
R. DALLIMONTI: "Advanced design of a central
operator console for process control"
"Microprocessor Controller for Process Heating
Applications", Seiten 1-19, Barber Colman Company,
USA, Sept. 1979

(73) Patentinhaber: **Siemens Aktiengesellschaft Berlin und
München, Wittelsbacherplatz 2, D-8000 München 2 (DE)**

(72) Erfinder: **Lesche, Wolfgang, Dipl.-Ing., Wildbergweg 13,
D-1000 Berlin 37 (DE)**
Erfinder: **Rindfleisch, Volker, Lichterfelder Ring 165,
D-1000 Berlin 45 (DE)**

ACTORUM AG

**Beschreibung**

Die Erfindung bezieht sich auf ein elektronisches Regelgerät mit

a) Einrichtungen zur Einstellung der Regelparameter, wobei
  a1) den Einrichtungen eine in einer Frontplatte liegende Adressiereinrichtung mit einer Skala zur Anwahl der Regelparameter zugeordnet ist, mit
b) einer analogen Anzeigevorrichtung, deren
  b1) Zeigerteile in der Frontplatte liegen und deren
  b2) eine Skalenteile für Ist- und Sollwert sich auf einer lösbar vor der Frontplatte gehaltenen Blende befinden und deren
  b3) weiterer Skalenteil für die Grösse der Regelparameter von der Frontplatte getragen ist, mit
c) Bedienungselementen auf der Frontplatte zur inkrementellen Veränderung des Sollwertes, mit
d) einer weiteren analogen Anzeigevorrichtung, deren
  d1) Zeigerteil in der Frontplatte liegt und deren
  d2) Skalenteil sich auf der Blende befindet, und mit
e) einem mittels der Blende betätigbaren Umschalter auf der Frontplatte, der
  e1) in einer Schalterstellung Verbindungen der Adressiereinrichtung mit den Einrichtungen zur Auswahl der Regelparameter und mit der einen Anzeigevorrichtung vorbereitet sowie durch Betätigen der einen Bedienungselemente eine Änderung der Grösse des jeweils angewählten Regelparameters ermöglicht und
  e2) in einer weiteren Schalterstellung die eine Anzeigevorrichtung an Soll- und Istwert entsprechende Messgrössen legt und eine Einstellung von Handstellwerten ermöglicht.

Bei einem bekannten elektronischen Regelgerät dieser Art (DE-A-30 02 745) besteht die Adressiereinrichtung aus einem Adressierschalter, der eine der Zahl der Einrichtungen zur Einstellung der Regelparameter entsprechende Anzahl von Schaltstellungen aufweist. Besitzt das elektronische Regelgerät eine grosse Anzahl solcher Einrichtungen, lassen sich also bei ihm verhältnismässig viele Regelparameter verändern, dann muss der Adressierschalter eine entsprechend hohe Zahl von Schaltstellungen aufweisen. Ein solcher Schalter ist nicht nur verhältnismässig aufwendig, sondern beansprucht auch einen relativ grossen Einbauraum. Ausserdem unterliegt ein solcher Schalter mechanischer Abnutzung.

Es ist ferner ein Regelgerät bekannt (Gerätebeschreibung «Microprozessor Controller for process heating applications», Seiten 1 bis 19, Barber Colman Company, USA, Sept. 1979) mit einer analogen Anzeigevorrichtung mit einem Zeigerteil und mit einem Skalenteil auf einer Frontplatte. Der Skalenteil enthält Angaben über anwählbare Regelparameter. Dabei ist dieser Skalenteil nur sichtbar, wenn eine Klappe geöffnet ist. Bei geöffneter Klappe kann durch Betätigung einer von ihr normalerweise abgedeckten Taste «SET UP» zusammen mit einer stets zugänglichen Taste «SET POINT» eines Bedienungsfeldes der gewünschte Regelparameter angewählt werden. Auf der Klappe befindet sich ein weiterer Skalenteil der analogen Anzeigevorrichtung, mit dem im Betrieb die Regelabweichung angezeigt wird. Eine weitere Anzeigevorrichtung ist als Zifferanzeige ausgebildet und dient dazu, alle übrigen Grössen zur Anzeige zu bringen. Unter anderem können dort auch die mit einer inkrementellen Einstellung gewonnenen Handstellwerte angezeigt werden.

Der Erfindung liegt – ausgehend von einem Regelgerät mit einem von einer Blende betätigbaren Umschalter – die Aufgabe zugrunde, ein elektronisches Regelgerät vorzuschlagen, das hinsichtlich seiner Einstellung nicht nur verhältnismässig einfach gestaltet ist, sondern diesbezüglich auch mit geringem Aufwand herstellbar ist.

Zur Lösung dieser Aufgabe ist ein elektronisches Regelgerät der eingangs angegebenen Art erfindungsgemäss derart ausgestattet, dass

f) die Adressiereinrichtung weitere Bedienungselemente umfasst, die der weiteren Anzeigevorrichtung zugeordnet sind,
g) die Einstellung von Handstellwerten inkrementell durch die weiteren Bedienungselemente erfolgt,
h) die Skala zur Anzeige der jeweils angewählten Einrichtung zur Einstellung der Regelparameter von einem weiteren Skalenteil der weiteren Anzeigevorrichtung gebildet ist,
i) auf der Frontplatte ein weiterer Umschalter angeordnet ist, über den
  i1) Verbindungen der weiteren Bedienungselemente mit Einrichtungen zur Änderung der Struktur des Regelgerätes und mit der weiteren Anzeigevorrichtung vorbereitbar sind, und
j) auf der Frontplatte sich ein zusätzlicher Skalenteil der weiteren Anzeigevorrichtung zur Anzeige der einstellbaren Struktur befindet.

Das erfindungsgemässe elektronische Regelgerät hat gegenüber dem bekannten Regelgerät den Vorteil, dass der Einstellung von Handstellwerten an sich erforderliche weitere Bedienungselemente zusätzlich dazu benutzt werden, die jeweilige Einrichtung zur Änderung des Regelparameters anzuwählen; ein zusätzlicher Schalter in Form eines Adressierschalters wird also nicht benötigt. Auch eine zusätzliche Anzeigevorrichtung ist zur Adressierung nicht erforderlich, weil der Zeigerteil der weiteren Anzeigevorrichtung dazu verwendet werden kann, indem dieser weiteren Anzeigevorrichtung auf der Frontplatte ein weiterer Skalenteil zugeordnet ist, der zur Anzeige der jeweils angewählten Einrichtung zur Einstellung der Regelparameter dient. Auch zur Änderung der Regelstruktur des erfindungsgemässen Gerätes bedarf es keines zusätzlichen Adressierschalters, weil allein durch einen weiteren Umschalter im Zusammenwirken mit einem zusätzlichen Skalenteil der weiteren Anzeigevorrichtung mittels der weiteren Bedienungselemente die jeweilige Regelstruktur einstellbar ist.

Bei dem erfindungsgemässen elektronischen Regelgerät können als analoge Anzeigevorrichtungen auch quasianaloge Vorrichtungen verwendet werden, unter denen Anzeigevorrichtungen verstanden werden, die aus einer Reihe linienförmig nebeneinander angeordneter und jeweils getrennt ansteuerbarer optischer Anzeigeelemente bestehen.

Bei dem erfindungsgemässen Gerät kann zusätzlich, falls dies erwünscht ist, unter Benutzung der einen Bedienungselemente noch jeweils eine Veränderung der Unterstruktur erfolgen, wobei die jeweils angewählte Unterstruktur an dem weiteren Skalenteil der einen Anzeigevorrichtung ablesbar ist.

Zur Erläuterung der Erfindung ist in

Fig. 1 in perspektivischer Darstellung die im Zusammenhang mit der Erfindung besonders interessierende Frontbaugruppe eines Ausführungsbeispiels des erfindungsgemässen Regelgerätes, in

Fig. 2 eine Frontansicht derselben Frontbaugruppe bei geschlossener Blende, in

Fig. 3 eine Ansicht auf die Frontbaugruppe bei abgenommener Blende und in

Fig. 4 der prinzipielle schaltungstechnische Aufbau des dargestellten Ausführungsbeispiels wiedergegeben.

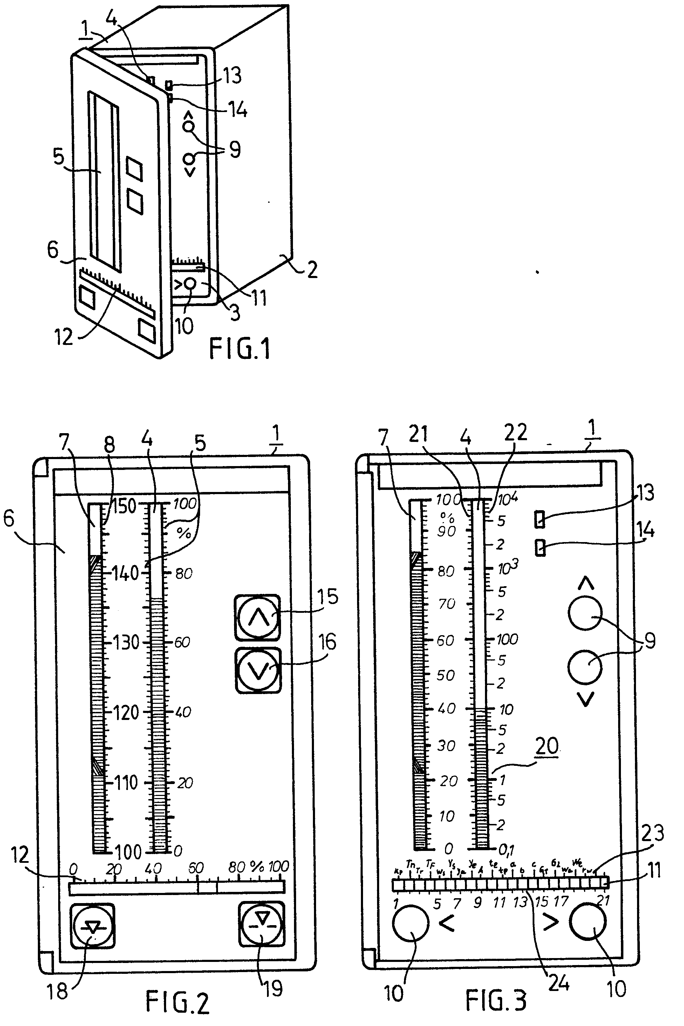

Wie die Fig. 1 zeigt, weist die dargestellte Frontbaugruppe 1 des elektronischen Regelgerätes ein Gehäuseteil 2 auf, das eine Frontplatte 3 trägt. Auf der Frontplatte 3 befindet sich ein Zeigerteil 4 für den Sollwert einer analogen Anzeigevorrichtung, deren einer Skalenteil 5 für den Sollwert (vgl. auch Fig. 2) sich auf einer von der Frontplatte 3 abklappbaren Blende 6 befindet. Ein weiterer Zeigerteil 7 (für den Ist-Wert) der einen analogen Anzeigevorrichtung liegt ebenfalls in der Frontplatte 3, während ein Skalenteil 8 für den Istwert auf der Blende 6 aufgebracht ist. In der Frontplatte 3 sind ferner Bedienungselemente 9 zur inkrementellen Veränderung des Sollwertes angebracht, der von dem Zeigerteil 4 angezeigt wird.

Wie Fig. 1 ferner (teilweise) erkennen lässt, befinden sich auf der Frontplatte 3 zwei weitere Bedienungselemente 10, die einer weiteren Anzeigevorrichtung zugeordnet sind. Diese weitere Anzeigevorrichtung besteht aus einem in der Frontplatte 3 liegenden Zeigerteil 11 und einem Skalenteil 12 auf der Blende 6. Die weiteren Bedienungselemente 10 dienen zur inkrementellen Einstellung von Handstellwerten. Im normalen Betriebsfall wird die weitere analoge Anzeigevorrichtung zur Anzeige der Stellgrösse benutzt.

Auf der Frontplatte 3 ist ferner ein Umschalter 13 angeordnet, der durch die Blende 6 bei deren Schliessen betätigt wird. Durch diesen Umschalter 13 ist dafür gesorgt, dass das elektronische Regelgerät bei geschlossener Blende 6 zur Betriebsanzeige und der üblichen Bedienung geeignet ist. Bei einem Öffnen der Blende 6 und einer damit einhergehenden Betätigung des Umschalters 13 ist eine Betriebsanzeige und eine übliche Bedienung nicht mehr möglich; es lassen sich dann eine Parametrierung und Strukturierung des Regelgerätes vornehmen. Zwischen Strukturierung und Parametrierung kann mittels Betätigung eines weiteren Umschalters 14 gewählt werden, der auf der Frontplatte 3 hinter der Blende im geschlossenen Zustand liegt.

Wie Fig. 2 im einzelnen erkennen lässt, befinden sich auf der Blende 6 mit Markierungen versehene Tastglieder 15 und 16, die bei ihrer Betätigung die dahinter auf der Frontplatte befindlichen Bedienungselemente 9 schalten. Im Betrieb des elektronischen Regelgerätes lässt sich durch Betätigen des Tastgliedes 15 der an dem Skalenteil 5 angezeigte Sollwert erhöhen bzw. durch Betätigen des Tastgliedes 16 verringern.

Auf der Blende 6 befinden sich weitere Tastglieder 18 und 19, die mit den unter ihnen auf der Frontplatte 3 angebrachten weiteren Bedienungselementen 10 zusammenwirken. Die weiteren Tastglieder 18 und 19 sind der weiteren Anzeigevorrichtung mit dem Skalenteil 12 auf der Blende 6 und dem weiteren Zeigerteil 11 auf der Frontplatte 3 zugeordnet.

Auf der Frontplatte 3 befindet sich – wie Fig. 3 zeigt – ein weiterer Skalenteil 20 der einen Anzeigevorrichtung. Dieser weitere Skalenteil 20, der aus zwei Skalen 21 und 22 besteht, dient zur Anzeige der Grösse des jeweils angewählten Regelparameters. Der weitere Skalenteil 20 ist durch die Blende 6 verdeckt, wenn diese auf der Frontplatte 3 aufliegt. Auf der Frontplatte 3 ist ferner ein weiterer Skalenteil 23 der weiteren Anzeigevorrichtung aufgebracht. Dieser weitere Skalenteil trägt Bezeichnungen der jeweils änderbaren Regelparameter des elektronischen Regelgerätes. Auf einer unterhalb des weiteren Skalenteils 23 befindlichen Skala 24 angebrachte Ziffern dienen zur Kennzeichnung der jeweils angewählten Regelstruktur, denn diese infolge Betätigung des weiteren Umschalters 14 verändert werden soll.

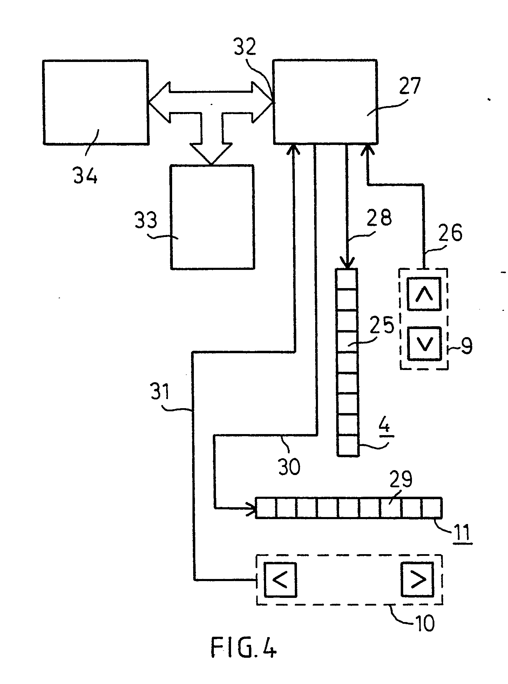

Bei dem in Fig. 4 dargestellten prinzipiellen schaltungstechnischen Aufbau des elektronischen Regelgerätes (ohne die Anordnung zur Istwertanzeige) sind die Teile, die mit denen nach den vorangehenden Figuren übereinstimmen, mit gleichen Bezugszeichen versehen. Der Zeigerteil 4 der einen Anzeigevorrichtung besteht hier aus einer Reihe von optischen Anzeigeelementen 25. Diesem Zeigerteil 4 sind die Bedienungselemente 9 zugeordnet. Diese Bedienungselemente 9 sind über eine Steuerleitung 26 mit einer Ein- und Ausgabeeinheit 27 verbunden. Über eine weitere Steuerleitung 28 ist ein Ausgang der Ein- und Ausgabeeinheit 27 mit dem Zeigerteil 4 verbunden. Der Zeigerteil 11 der weiteren Anzeigevorrichtung besteht ebenfalls aus einer Reihe optischer Anzeigeelemente 29. Er ist über eine weitere Steuerleitung 30 mit der Ein- und Ausgabeeinheit 27 verbunden. Eine weitere Steuerleitung 31 verläuft zwischen den weiteren Bedienungselementen 10 und der Ein- und Ausgabeeinheit 27. Durch Betätigen der Bedienungselemente 9 bzw.

10 werden an einem Datenausgang 32 der Ein- und Ausgabeeinheit 27 Daten erzeugt, mit denen bestimmte Verknüpfungen im elektronischen Regelgerät hergestellt werden können. Diese Daten sind so zusammengesetzt, dass sie in einem Mikroprozessor 33, in dem der geforderte Regelkreis durch ein Regelprogramm verwirklicht ist, eine Herstellung von Verknüpfungen bewirken.

Die Daten am Datenausgang 32 der Ein- und Ausgabeeinheit 27 werden zusätzlich in einem Speicher 34 hinterlegt, dessen Speicherinhalt auch bei Spannungsausfall erhalten bleibt.

Das in den Fig. 1 bis 4 dargestellte und oben beschriebene Regelgerät arbeitet in folgender Weise:

Während des normalen Betriebes des elektronischen Regelgerätes ist dessen Blende 6 auf die Frontplatte 3 geklappt, so dass nur die Bedienungselemente 9 über die Tastglieder 15 und 16 und die weiteren Bedienungselemente 10 über die weiteren Tastglieder 18 und 19 zugänglich sind. Über die Tastglieder 15 und 16 kann der Sollwert inkrementell erhöht oder gesenkt werden. Mittels der weiteren Tastglieder 18 und 19 kann inkrementell die Stellgrösse von Hand eingestellt werden, wenn das Gerät durch Betätigen nicht dargestellter Schaltmittel von Automatik- auf Handbetrieb umgeschaltet ist.

Soll bei dem elektronischen Regelgerät die Parametrierung geändert werden, dann wird die Blende 6 von der Frontplatte weggeklappt, wodurch der eine Umschalter 13 betätigt wird. Dadurch wiederum wird eine Verbindung der einen Bedienungselemente 10 zu den Einrichtungen zur Einstellung der Regelparameter vorbereitet. Ausserdem werden weitere Verbindungen vorbereitet, über die die weiteren Bedienungselemente 10 mit den Einrichtungen zur Einstellung der Regelparameter verbindbar sind. Gleichzeitig werden die einen Bedienungselemente 9 mit dem dem weiteren Skalenteil 20 zugeordneten Zeigerteil 4 der einen Anzeigevorrichtung verbunden; entsprechend wird eine Verbindung von den weiteren Bedienungslementen 10 zu dem Zeigerteil 11 der weiteren Anzeigevorrichtung vorbereitet. Durch Betätigen der einen Bedienungselemente 10 wird der anzuzeigende oder zu ändernde Regelparameter angewählt, wobei die Anwahl durch den Zeigerteil 11 im Zusammenwirken mit dem Skalenteil 23 zur Anzeige gebracht wird. Die Grösse des angewählten Regelparameters kann durch Betätigen der einen Bedienungselemente 9 erfolgen, wobei durch Betätigen des in der Fig. 3 oberen einen Bedienungselementes 9 der jeweils angewählte Regelparameter erhöht und durch Betätigen des in der Fig. 3 unteren einen Bedienungselementes der Wert des Regelparameters verringert wird.

Eine Änderung der Struktur des elektronischen Regelgerätes wird dadurch bewirkt, dass der weitere Umschalter 14 betätigt wird. Nach Bedienung dieses weiteren Umschalters kann durch die weiteren Bedienungselemente 10 anhand der Skala 24 des weiteren Skalenteils der weiteren Anzeigevorrichtung eine bestimmte, durch eine Ziffer gekennzeichnete Struktur angewählt werden. Unterstrukturen können dadurch gewählt werden, dass bei betätigtem weiterem Umschalter 14 die einen Bedienungselemente 9 betätigt werden; sie werden mittels des Skalenteils 21 angezeigt.

**Patentanspruch**

1. Elektronisches Regelgerät mit
a) Einrichtungen zur Einstellung der Regelparameter, wobei
   a1) den Einrichtungen eine in einer Frontplatte (3) liegende Adressiereinrichtung (10, 11, 23) mit einer Skala (23) zur Anwahl der Regelparameter zugeordnet ist, mit
b) einer analogen Anzeigevorrichtung, deren
   b1) Zeigerteile (4, 7) in der Frontplatte (3) liegen und deren
   b2) eine Skalenteile (5, 8) für Ist- und Sollwert sich auf einer lösbar vor der Frontplatte (3) gehaltenen Blende (6) befinden und deren
   b3) weiterer Skalenteil (20) für die Grösse der Regelparameter von der Frontplatte (3) getragen ist, mit
c) Bedienungselementen (9) auf der Frontplatte (3) zur inkrementellen Veränderung des Sollwertes, mit
d) einer weiteren analogen Anzeigevorrichtung, deren
   d1) Zeigerteil (11) in der Frontplatte (3) liegt und deren
   d2) Skalenteil (12) sich auf der Blende (6) befindet, und mit
e) einem mittels der Blende (6) betätigbaren Umschalter (13) auf der Frontplatte (3), der
   e1) in einer Schalterstellung (Blende offen) Verbindungen der Adressiereinrichtung (10, 11, 23) mit den Einrichtungen zur Anwahl der Regelparameter und mit der einen Anzeigevorrichtung vorbereitet sowie durch Betätigen der einen Bedienungselemente (9) eine Änderung der Grösse des jeweils angewählten Regelparameters ermöglicht und
   e2) in einer weiteren Schalterstellung (Blende geschlossen) die eine Anzeigevorrichtung an Soll- und Istwert entsprechende Messgrössen legt und eine Einstellung von Handstellwerten ermöglicht,
dadurch gekennzeichnet, dass
f) die Adressiereinrichtung weitere Bedienungselemente (10) umfasst, die der weiteren Anzeigevorrichtung (11, 12) zugeordnet sind, dass
g) die Einstellung von Handstellwerten inkrementell durch die weiteren Bedienungselemente (10) erfolgt, dass
h) die Skala (23) zur Anzeige der jeweils angewählten Einrichtung zur Einstellung der Regelparameter von einem weiteren Skalenteil (23) der weiteren Anzeigevorrichtung gebildet ist, dass
i) auf der Frontplatte (3) ein weiterer Umschalter (14) angeordnet ist, über den
   i1) Verbindungen der weiteren Bedienungselemente (10) mit Einrichtungen zur Änderung der Struktur des Regelgerätes und mit der weiteren Anzeigevorrichtung vorbereitbar sind, und dass sich

j) auf der Frontplatte (3) ein zusätzlicher Skalenteil (24) der weiteren Anzeigevorrichtung zur Anzeige der einstellbaren Struktur befindet.

**Claim**

1. Electronic control apparatus, with

a) devices for adjusting the control parameters, wherein

   a1) an addressing device (10, 11, 23) located in a front panel (3) and with a scale (23) for selecting the control parameters is associated with the devices, with

b) an analog indicating device,

   b1) whose indicating parts (4, 7) are located in the front panel (3), and

   b2) whose one scale parts (5, 8) for actual and nominal values are located on a closure (6), which is supported detachably in front of the front panel (3), and

   b3) whose further scale part (20) for the value of the control parameters is carried by the front panel (3), with

c) operating elements (9) on the front panel (3) for the incremental alteration of the nominal value, with

d) a further analog indicating device,

   d1) whose indicating part (11) is located in the front panel (3), and d2) whose scale part (12) is located on the closure (6), and with

e) a changeover switch (13), which is located on the front panel (3) and can be actuated by means of the closure (6), wherein this changeover switch

   e1) enables connections of the addressing device (10, 11, 23) with the devices for selecting the control parameters and with the one indicating device, in one switch position (closure open), and, by actuating one of the operating elements (9), enables the value of the respectively selected control parameter to be altered and

   e2) sets the one indicating device at measured values corresponding to the nominal and actual values, in a further switch position (closure closed), and enables values set by hand to be adjusted,

characterised in that

f) the addressing device comprises further operating elements (10), which are associated with the further indicating device (11, 12),

g) the adjustment of values set by hand occurs incrementally via the further operating elements (10),

h) the scale (23) for indicating the respectively selected device for adjusting the control parameters is formed by a further scale part (23) of the further indicating device,

i) a further changeover switch (14) is arranged on the front panel (3), wherein

   i1) connections of the further operating elements (10) with devices for altering the structure of the control apparatus and with the further indicating device can be prepared via this changeover switch, and

j) an additional scale part (24) of the further indicating device is located on the front panel (3) in order to indicate the adjustable structure.

**Revendication**

1. Appareil électronique de régulation comprenant

a) des dispositifs pour l'ajustement des paramètres de réglage, auxquels est coordonné

   a1) un dispositif d'adressage (10, 11, 23) situé dans une plaque frontale (3) et possédant une échelle (23) pour la sélection des paramètres de réglage,

b) un afficheur analogique avec

   b1) des parties indicatrices (4, 7) situées dans la plaque frontale,

   b2) des premières parties de graduation (5, 8) pour une valeur réelle et une valeur de consigne, situées sur un recouvrement ou cache (6) maintenu devant la plaque frontale (3) de façon à pouvoir être détaché, ainsi que

   b3) une seconde partie de graduation (20) pour la grandeur des paramètres de réglage, laquelle est portée par la plaque frontale (3),

c) des éléments de commande (9) sur la plaque frontale (3) pour le changement incrémentiel de la valeur de consigne,

d) un second afficheur analogique avec

   d1) une partie indicatrice (11) située dans la plaque frontale (3),

   d2) une partie de graduation (12) située sur le cache (6) et

e) un commutateur (13) prévu sur la plaque frontale (3) et manœuvrable au moyen du cache (6), commutateur qui

   e1) dans une position (cache écarté ou ouvert), prépare des liaisons du dispositif d'adressge (10, 11, 23) aux dispositifs pour la sélection des paramètres de réglage et avec le premier afficheur, et permet le changement de la grandeur du paramètre de réglage sélecté à chaque fois par l'actionnement d'un des éléments do commande (9) et

   e2) dans une seconde position (cache fermé), raccorde le premier afficheur à des grandeurs de mesure correspondant respectivement à la valeur de consigne et à la valeur réelle, et permet l'ajustement de valeurs de réglage manuel,

caractérisé en ce que

f) le dispositif d'adressage comprend de seconds éléments de commande (10) qui sont coordonnés au second afficheur (11, 12), que

g) l'ajustement de valeurs de réglage manuel s'effectue, incrémentiellement, par les seconds éléments de commande (10), que

h) l'échelle (23) pour l'indication du dispositif sélecté en vue de l'ajustement des paramètres de réglage est formée par une seconde partie de graduation (23) du second afficheur, que

i) un second commutateur (14) est disposé sur la plaque frontale (3), commutateur par lequel

i1) peuvent être préparées des liaisons des seconds éléments de commande (10) avec des dispositifs pour le changement de la structure de l'appareil de régulation et avec le second afficheur, et que

j) la plaque frontale (3) présente une partie de graduation supplémentaire (24) du second afficheur pour l'indication de la structure modifiable.

FIG.1

FIG.2

FIG.3

FIG. 4